# FASCICULE DE BREVET EUROPEEN

(11) **EP 3 191 369 B1**
(45) Date de publication et mention de la délivrance du brevet: **10.10.2018**
(21) Numéro de dépôt: 15763287.8
(22) Date de dépôt: 08.09.2015
(51) Int. Cl.: B64F 5/00

(54) **UNITÉ DE RÉPARATION POUR NACELLE**
GONDELREPARATUREINHEIT
POD REPAIR UNIT

(30) Priorité: 08.09.2014 FR 1402015
(43) Date de publication de la demande: 19.07.2017
(73) Titulaire: Thales, 92400 Courbevoie (FR)
(72) Inventeur: BIHANNIC, Didier, 94628 Rungis (FR)
(74) Mandataire: Lavoix
(86) Numéro de dépôt international: PCT/EP2015/070500
(87) Numéro de publication internationale: WO 2016/038037

(56) Documents cités:
- EP-A2- 2 767 338
- WO-A1-00/19042
- DE-C- 851 240
- DE-C1- 19 536 373
- FR-A1- 2 254 409
- FR-A1- 2 611 568
- GB-A- 2 306 376
- JP-B2- 2 857 209
- US-A- 4 928 348
- US-A- 5 685 771
- US-A1- 2002 105 251
- US-A1- 2012 031 042

## Description

La présente invention concerne une unité de réparation pour nacelle, notamment pour une nacelle de désignation laser.

Une nacelle ou pod est un conteneur fixé sous un porteur pour embarquer différents dispositifs tels que, par exemple, des caméras, des imageurs infrarouges ou encore des désignateurs laser.

La réparation des sections avant des nacelles, en particulier des nacelles de désignation laser, s'effectue en salle blanche.

Une salle blanche ou salle propre est, selon la norme ISO 14644-1, une pièce ou une série de pièces où la concentration en particules est maîtrisée afin de minimiser, notamment, l'introduction, la génération et la rétention de particules à l'intérieur de la salle blanche. Des paramètres tels que la température, l'humidité et la pression relative peuvent, également, être maintenus à un niveau précis dans une salle blanche.

Il est connu du document DE 851 240 une installation pour effectuer des opérations chirurgicales sur un patient, notamment des opérations dentaires. L'installation comprend une bulle fixée sur une caisse délimitant un espace intérieur étanche aux contaminants extérieurs. Le chirurgien effectue les opérations chirurgicales dans l'espace intérieur.

En revanche, l'installation décrite dans DE 851 240 n'est pas adaptée pour réparer une nacelle.

Or, de nombreux utilisateurs de nacelles ne disposent pas de salles blanches. Dans ce cas, la nacelle à réparer doit être rapatriée chez le fabricant pour être réparée dans une salle blanche.

Un tel rapatriement est coûteux tant en argent qu'en temps.

Pour compenser les longs délais de rapatriement et de réparations des nacelles, des pièces de rechanges sont vendues par les fabricants.

Toutefois, le coût des pièces de rechange est très élevé car la section avant d'une nacelle est un élément coûteux.

Le document WO 00/19042 A1 présente une unité et un procédé de réparation spécifiques pour une nacelle. Cependant, cette unité est formée par une structure gonflable de grande taille, dont le transport et l'installation sont fastidieux.

Il existe donc un besoin pour mettre en oeuvre aisément la réparation de nacelles et pour réduire la durée de réparation des nacelles.

A cet effet l'invention a pour objet selon la revendication 1 une unité de réparation pour nacelle, notamment pour une nacelle de désignation laser, comprenant :
- une caisse transportable,
- une bulle fixée sur la caisse, la bulle ayant un état replié et un état déployé, la bulle comportant une ouverture d'introduction d'une partie d'une nacelle et au moins deux protubérances formant tube de passage des mains d'un opérateur, chaque tube débouchant dans la bulle,
- un dispositif d'approvisionnement en gaz propre à faire passer la bulle de l'état replié à l'état déployé,
la caisse et la bulle délimitant un espace intérieur étanche aux contaminants extérieurs à la fois dans l'état replié et dans l'état déployé, chaque tube comprenant des élastiques, les élastiques étant propres à serrer les bras d'un opérateur lorsque les mains dudit opérateur sont introduites dans la bulle, l'unité de réparation comprenant un pressostat connecté d'une part à l'intérieur de la caisse et d'autre part au dispositif d'approvisionnement en gaz, le pressostat étant propre à mesurer la pression différentielle à l'intérieur de la bulle et à désactiver le dispositif d'approvisionnement en gaz lorsque la pression différentielle mesurée à l'intérieur de la bulle est supérieure ou égale en valeur absolue à une valeur prédéterminée.

Suivants des modes de réalisation particuliers, l'unité de réparation comprend une ou plusieurs des caractéristiques des revendications 2 à 6, prise(s) isolément ou suivant toutes combinaisons techniquement possibles :
- la caisse comprend un sas tiroir propre à permettre l'introduction d'éléments dans la caisse sans contaminer l'espace intérieur,
- la bulle est faite dans un matériau souple et transparent,
- le nombre de tubes est pair et chaque tube est diamétralement opposé à un autre tube de la bulle,
- le dispositif d'approvisionnement en gaz est un moto-ventilateur soufflant à filtre propre à générer un flux d'air dont la concentration particulaire est maitrisée, et
- le dispositif d'approvisionnement en gaz comporte une ou plusieurs bouteilles d'azote propre à générer un flux d'azote dont la concentration particulaire est maîtrisée.

L'invention a également pour objet selon la revendication 7 un procédé de réparation d'une nacelle comportant les étapes suivantes :
- la fourniture d'une unité de réparation du type précité,
- la fourniture d'une nacelle à réparer,
- le déploiement de la bulle de l'unité de réparation,
- l'introduction de la nacelle à réparer dans l'ouverture de la bulle,
- l'introduction des mains d'un opérateur dans deux tubes de la bulle,
- la réparation de la nacelle à réparer par l'opérateur, et
- le dégonflage de la bulle.

Suivant un mode de réalisation particulier du procédé de réparation d'une nacelle, selon la revendication 8, la nacelle étant telle que précédemment décrite et la caisse comprenant un sas tiroir propre à permettre l'introduction d'éléments dans la caisse sans contaminer l'espace intérieur, le procédé de réparation précédemment décrit comprend également l'étape suivante :
- l'introduction d'éléments dans la caisse au moyen du sas tiroir.

L'invention a également pour objet selon la revendication 9 un procédé de préparation de l'unité de réparation précitée, la caisse comprenant un couvercle, comportant les étapes suivantes :
- la fourniture d'une caisse dans une salle blanche,
- la fourniture d'une bulle, ayant un état déployé et un état replié, dans la salle blanche,
- le remplissage de la caisse avec des outils et des pièces de rechange,
- la fixation de la bulle dans l'état replié sur la caisse, et
- le positionnement du couvercle sur la caisse.

D'autres caractéristiques et avantages de l'invention apparaîtront à la lecture de la description qui suit de modes de réalisation de l'invention, donnés à titre d'exemple uniquement et en référence à la figure unique qui est une représentation schématique d'un exemple d'unité de réparation pour nacelle selon l'invention.

Une unité de réparation 10 pour nacelle et une nacelle 11 à réparer sont représentées sur la figure.

L'unité de réparation 10 sert notamment à réparer des nacelles, en particulier des nacelles de désignation laser.

Comme visible sur la figure, l'unité de réparation 10 comprend une caisse 14 transportable, une bulle 18 fixée sur la caisse 14 délimitant avec la caisse 14 un espace intérieur, un dispositif d'approvisionnement en gaz 22 de la caisse 14, ainsi qu'un pressostat 26 de contrôle du dispositif d'approvisionnement 22 et de la caisse 14.

Bien que non représenté sur la figure, l'unité de réparation 10 comprend, en outre, des documents techniques à disposition d'un opérateur.

La caisse 14 est un contenant de forme parallélépipédique.

Dans la suite de la description, il est défini une direction longitudinale X représentée sur la figure par un axe X et correspondant à la longueur de la caisse 14. Il est, en outre, défini une première direction transversale, dite d'élévation Z, perpendiculaire à la direction longitudinale X et représentée sur la figure par un axe Z. Il est, également, défini une deuxième direction transversale Y, perpendiculaire à la direction longitudinale X et à la première direction transversale Z. La deuxième direction transversale Y est représentée sur la figure par un axe Y.

Les dimensions de la caisse 14 sont, par exemple, de 50 cm suivant la direction longitudinale X, de 50 cm suivant la première direction transversale Z et de 50 cm suivant la deuxième direction transversale Y. Par soucis de commodité, les dimensions de la caisse 14 sur la figure ne correspondent pas aux dimensions réelles de la caisse 14.

La caisse 14 comporte quatre panneaux latéraux, un fond et un couvercle amovible (non représenté). Il est entendu par l'expression « intérieur de la caisse 14 » l'espace situé dans la caisse 14 et délimité par les quatre panneaux latéraux, le fond et le couvercle de la caisse 14. De manière similaire, il est entendu par l'expression « extérieur de la caisse 14 » l'espace différent de l'intérieur de la caisse 14.

Le volume de l'intérieur de la caisse 14 est réduit de sorte que la caisse 14 soit facilement transportable par un opérateur.

Par exemple, le volume de l'intérieur de la caisse 14 est de l'ordre de 0,125 m³.

La caisse 14 est, par exemple, en métal tel que l'acier.

La caisse 14 comporte des outils 30, des pièces de rechange 34 et un sas tiroir 38.

Les outils 30 sont utilisables par un opérateur pour réparer la nacelle 11. Il est entendu par « outil », un instrument physique utilisable par un opérateur, directement ou par l'intermédiaire d'une machine, pour exercer une action, par exemple une action mécanique.

Les outils 30 présents dans la caisse 14 sont, par exemple, des tournevis, des pinces, des vis, des écrous, ou des boulons.

Les pièces de rechange 34 sont propres à remplacer des pièces usagées ou détériorées de la nacelle 11. Les pièces de rechanges 34 sont, par exemple, des systèmes lasers, des cartes électroniques ou tout autres pièces de rechange utiles à l'opération de maintenance.

Les outils 30 et pièces de rechange 34 présents dans la caisse 14 ont été insérés au préalable, lors de la préparation de l'unité de réparation 10, en vue de la réparation de la nacelle 11.

La nature des outils 30 et des pièces de rechange 34 varie en fonction du type de nacelle 11 considéré, c'est-à-dire en fonction des dispositifs transportés par la nacelle 11. De tels dispositifs sont, par exemple, des caméras, des imageurs infrarouges ou encore des désignateurs laser.

La nature des outils 30 et des pièces de rechange 34 varie, également, en fonction des opérations à effectuer sur la nacelle 11 en vue de sa réparation. De telles opérations sont, par exemple, des opérations de remplacement de pièces usagées, de changements de câbles électriques, de changement de cartes électroniques, de maintenance.

Le sas tiroir 38 est un casier ou un compartiment propre à coulisser entre l'intérieur de la caisse 14 et l'extérieur de la caisse 14 au moyen d'une poignée. Le sas tiroir 38 comporte donc plusieurs états : un état fermé lorsque le sas tiroir 38 est dans sa totalité à l'intérieur de la caisse 14, un état ouvert lorsque le sas tiroir 38 est au maximum hors de l'intérieur de la caisse 14 et un état intermédiaire entre l'état ouvert et l'état fermé.

Le sas tiroir 38 est de forme parallélépipédique.

Les dimensions du sas tiroir 38 sont, par exemple, de l'ordre de 40 centimètres (cm) suivant la direction longitudinale X, de l'ordre de 20 cm suivant la première direction transversale Z et de l'ordre de 50 cm suivant la deuxième direction transversale Y.

Le sas tiroir 38 est propre à coulisser à travers l'un des panneaux latéraux de la caisse 14.

Le sas tiroir 38 comporte un panneau avant 38A, un panneau arrière 38B, deux panneaux latéraux 38C, un fond (non visible sur la figure), une trappe 39, un système de balayage (non représenté sur la figure) et un voyant lumineux 41.

Le panneau avant 38A du sas tiroir 38 comporte une poignée apte à être saisie par un opérateur à l'extérieur de la caisse 14 pour faire coulisser le sas tiroir 38. Cette poignée est située à l'extérieur de la caisse 14.

Le panneau arrière 38B du sas tiroir 38 est réalisé dans un matériau étanche. Par exemple, le panneau arrière 38B du sas tiroir 38 est réalisé en PMMA (acronyme anglais de *poly(méthacrylate de méthyle*)).

Un tel panneau arrière 38B est propre à empêcher la pénétration de contaminants dans l'espace intérieur formé par la caisse 14 et la bulle 18.

Les panneaux latéraux 38C du sas tiroir 38 sont situés à la perpendiculaire du panneau avant 38A et du panneau arrière 38B.

Le fond du sas tiroir 38 est propre à soutenir les panneaux latéraux 38C, le panneau avant 38A et le panneau arrière 38B de la caisse 14.

La trappe 39 est un panneau fermant le sas tiroir 38. La trappe 39 est propre à être levée ou baissée à volonté par un opérateur.

Le panneau avant 38A, le panneau arrière 38B, les deux panneaux latéraux 38C, le fond et la trappe 39 définissent l'intérieur du sas tiroir 38.

Le système de balayage est un système propre à produire un flux de gaz et à aspirer ou balayer des contaminants présents dans le sas tiroir 38 de sorte que la concentration des particules à l'intérieur du sas tiroir 38 soit conforme à la classe 6 ou à la classe 7 de la norme ISO 14644-1. Le système de balayage est propre à détourner une partie de flux d'air propre de gonflage de la bulle 18.

Le voyant lumineux 41 est une minuterie propre à indiquer à un opérateur que l'aspiration ou le balayage des contaminants est terminé ou est en cours. Dans le cas où l'aspiration ou le balayage des contaminants est terminé, l'opérateur peut ouvrir la trappe 39 du sas tiroir 38.

Le voyant lumineux 41 est fixé sur le dessus de la trappe 39 en contact avec l'intérieur de la caisse 14.

Le voyant lumineux 41 est propre à clignoter à la fermeture du sas tiroir 38. Au terme du balayage, après quelques minutes, le voyant lumineux 41 est propre à passer à un état de lumière fixe.

La bulle 18 est une enceinte réalisée dans un matériau souple et élastique d'épaisseur suffisamment fine pour être souple et transparente mais assez épaisse pour résister à la chute d'un tournevis d'une hauteur de 2 mètres et à l'arrachement d'une force de 50 kg au niveau des manches. Un tel matériau est, par exemple, du latex ou du caoutchouc. Un matériau transparent permet, notamment, à un opérateur de visualiser aisément le contenu de la bulle 18 et de la caisse 14.

La bulle 18 est fixée sur la caisse 14 du côté opposé au fond de la caisse 14 et situé dans le plan formé par la direction longitudinale X et la deuxième direction transversale Y. En particulier, la bulle 18 est fixée sur la partie interne des panneaux latéraux de la caisse 14. Ainsi, l'étanchéité de la bulle 18 est assurée et le démontage de la bulle 18 est possible. La bulle 18 est, par exemple, fixée aux panneaux latéraux de la caisse 14 par des vis, des joints de fixation ou encore des lamelles ou des plaques métalliques.

La bulle 18 présente un état replié et un état déployé.

Il est défini par le terme « intérieur de la bulle 18 » l'espace situé sous la bulle 18 communiquant avec une partie de l'espace intérieur de la caisse 14. A l'inverse, le terme « extérieur de la bulle 18 » désigne l'espace situé hors de la bulle 18 et ne communiquant pas avec l'intérieur de la caisse 14.

Il est défini par le terme « surface intérieure de la bulle 18 » la surface de la bulle 18 en contact avec l'intérieur de la bulle 18. La surface intérieure de la bulle 18 est une surface propre puisque la surface intérieure de la bulle 18 n'est pas en contact avec des contaminants venant de l'extérieur de la bulle 18. De même, il est défini par le terme « surface extérieure de la bulle 18 » la surface de la bulle 18 en contact avec l'extérieur de la bulle 18. La surface extérieure de la bulle 18 est la surface en contact avec des contaminants venant de l'extérieur de la bulle 18.

Comme décrit précédemment, la bulle 18 forme avec la caisse 14 un espace intérieur. Il est entendu par le terme « espace intérieur » l'espace correspondant à l'intérieur de la bulle 18 qui est délimité, d'une part, par la surface intérieure de la bulle 18 et, d'autre part, par le fond et les parties des quatre panneaux latéraux de la caisse 14 situées sous la bulle 18. De même, il est entendu par le terme « espace extérieur » l'espace complémentaire de l'espace intérieur au sens mathématique du terme.

L'espace intérieur formé par la caisse 14 et la bulle 18 est étanche aux contaminants extérieurs, quel que soit l'état, replié ou déployé, de la bulle 18. Il est entendu, dans le contexte de l'invention, par le terme « étanche aux contaminants extérieurs », la propriété de laisser pénétrer peu de contaminants extérieurs dans l'espace intérieur.

Autrement formulé, cela signifie que moins de 0,01 % de l'espace intérieur en volume est occupé par des contaminants extérieurs.

De préférence, l'étanchéité est totale, c'est-à-dire qu'aucun contaminant extérieur n'a la capacité de passer depuis l'espace extérieur vers l'espace intérieur.

La concentration en particules de l'espace intérieur formé par la caisse 14 et la bulle 18 est maîtrisée. Par exemple, la concentration en particules de l'espace intérieur est assimilable à la classe 6 ou à la classe 7 de la norme ISO 14644-1. Les particules sont, par exemple, des poussières de taille variables, notamment, de l'ordre du micromètre.

De même, des paramètres tels que la pression sont maintenus à un niveau précis dans l'espace intérieur formé par la caisse 14 et la bulle 18. La surpression dans la bulle 18 est de quelques PSI au-dessus de la pression atmosphérique ambiante. Le terme « PSI », acronyme anglais de *pound-force per square inch*, désigne une unité de mesure de contraintes et de pressions.

L'espace intérieur formé par la caisse 14 et la bulle 18 est donc assimilable à une salle blanche.

Dans l'état replié, la bulle 18 est propre à occuper une partie de l'intérieur de la caisse 14 et le couvercle de la caisse 14 est apte à être disposé sur la caisse 14 de sorte à fermer la caisse 14.

Dans l'état déployé, la bulle 18 est apte à être déployée vers l'extérieur de la caisse 14. Un tel état déployé est obtenu par introduction d'un gaz dans la caisse 14.

Lorsque la bulle 18 est dans l'état déployé, le couvercle de la caisse 14 n'est plus positionnable à son emplacement dédié sur la caisse 14.

La bulle 18 comporte une ouverture 46, au moins deux protubérances formant tube 50 de passage des mains d'un opérateur dans la bulle 18 et une soupape de sécurité 54.

L'ouverture 46 est de forme et de taille adaptées pour l'introduction d'une partie de la nacelle 11 à réparer, en particulier pour l'introduction d'une section avant de nacelle de désignation laser.

Par exemple, l'ouverture 46 est de taille comprise entre 30 et 50 cm.

Par exemple, l'ouverture 46 est de forme circulaire ou encore de forme elliptique.

Les au moins deux protubérances formant tube 50 sont faites dans le même matériau que la bulle 18 et rattachées de manière non amovible à la bulle 18.

Les tubes 50 sont semblables à des manches ajustées aux poignets d'un opérateur.

Les tubes 50 sont situés à l'extérieur de la bulle 18 du côté de la surface extérieure de la bulle 18 et débouchent à l'intérieur de la bulle 18.

Les tubes 50 sont disposés de part et d'autre de la bulle 18.

Comme illustré sur la figure, la bulle 18 comprend quatre tubes 50, soit un nombre pair de tubes 50. Chaque tube 50 est disposé sur la bulle 18 de sorte à être diamétralement opposé à l'un des trois autres tubes 50. Un tel nombre de tubes 50 permet à un opérateur d'effectuer des opérations de réparation à différents endroits de la nacelle 11 à réparer dans la bulle 18.

Selon un autre exemple, la bulle comporte plus de quatre tubes 50 ou encore un nombre impair de tubes 50.

Les tubes 50 comportent des élastiques (non représentés) de sorte que lorsque la bulle 18 est déployée, un tube 50 est propre à permettre l'introduction d'une main d'un opérateur dans la bulle 18 tout en étant propre à serrer de manière élastique le bras de l'opérateur sur lequel s'articule la main. Les tubes 50 sont chacun munis d'un obturateur. L'obturateur de chaque tube 50 est propre à éviter la fuite de gaz hors de la bulle 18, lorsque le tube 50 n'est pas utilisé par un opérateur.

La soupape de sécurité 54 est aussi appelée soupape de sûreté. Il est entendu par « soupape de sécurité » un dispositif de protection contre les surpressions dans un ensemble soumis à une pression.

La soupape de sécurité 54 est apte à être installée à de multiples endroits au niveau de la surface extérieure de la bulle 18. Par exemple, la soupape de sécurité 54 est fixée sur un des panneaux latéraux de la caisse 14. La soupape de sécurité 54 est en contact avec l'intérieur et l'extérieur de la bulle 18.

La soupape de sécurité 54 est propre à s'ouvrir et à laisser échapper du gaz contenu dans la bulle 18 lorsque la valeur de la pression à l'intérieur de la bulle 18 dépasse une valeur de pression prédéterminée.

La valeur de pression prédéterminée d'ouverture de la soupape 54 est égale à deux fois la surpression nominale d'emploi.

Une telle soupape de sécurité 54 permet, ainsi, de sécuriser la bulle 18 de surpressions risquant de faire éclater la bulle 18.

Le dispositif d'approvisionnement en gaz 22 permet d'acheminer un gaz dans l'espace intérieur formé par la caisse 14 et la bulle 18. Un tel dispositif d'approvisionnement 22 est propre à déployer la bulle 18.

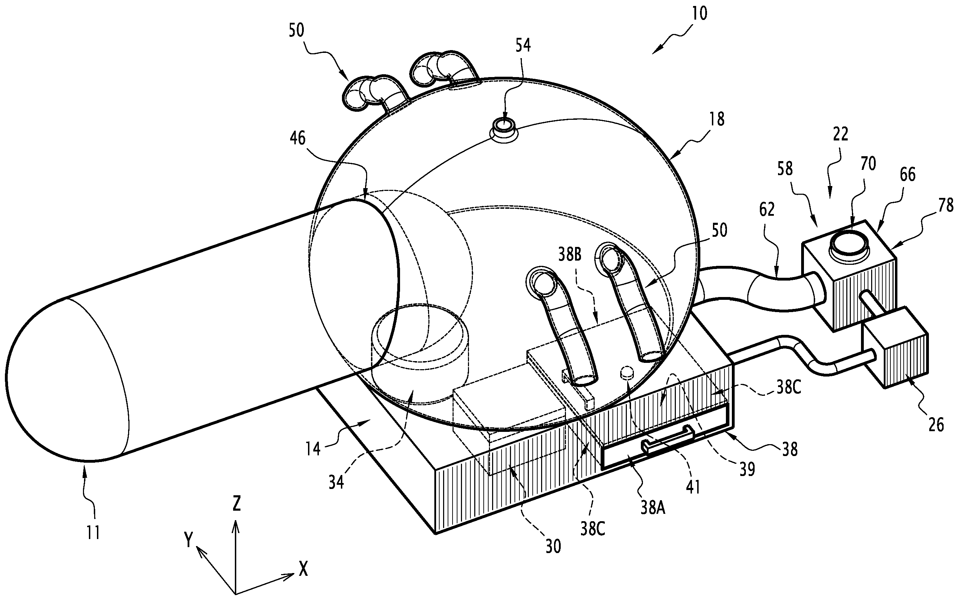

Comme illustré sur la figure 1, le dispositif d'approvisionnement en gaz 22 est situé à l'extérieur de la bulle 18 et de la caisse 14.

Toutefois, il est également possible que le dispositif d'approvisionnement 22 soit situé à l'intérieur de la caisse 14. Une telle disposition du dispositif d'approvisionnement 22 permet, notamment, de limiter le nombre de caissons de transport lors du transport de l'unité de réparation 10.

Le gaz acheminé par le dispositif d'approvisionnement 22 est un gaz « propre », c'est-à-dire que la concentration particulaire de ce gaz est conforme à la classe 6 ou à la classe 7 de la norme ISO 14644-1.

Le gaz contenu dans le dispositif d'approvisionnement 22 est, par exemple, de l'air. Préférentiellement, le gaz contenu dans le dispositif d'approvisionnement 22 est de l'azote.

Dans un premier mode de réalisation, le dispositif d'approvisionnement en gaz 22 comporte un moto-ventilateur soufflant à filtre 58 et un conduit 62 de rattachement du dispositif d'approvisionnement 22 à la caisse 14.

Le moto-ventilateur soufflant à filtre 58 est propre à récupérer l'air ambiant situé à l'extérieur de la bulle 18, à le filtrer et à injecter l'air filtré dans l'espace intérieur formé par la caisse 14 et la bulle 18.

Le moto-ventilateur à filtre 58 est propre à générer un flux d'air dont la concentration particulaire est maîtrisée.

Le moto-ventilateur soufflant à filtre 58 comprend un ventilateur 66 couplé avec un filtre 70 et un moteur 78.

Le ventilateur 66 permet la création d'un vent ou d'un courant d'air artificiel à partir de l'air ambiant.

Le filtre 70 permet de filtrer les particules telles des poussières présentes dans l'air ambiant de sorte que l'air injecté par le dispositif d'approvisionnement 22 dans l'espace intérieur formé par la caisse 14 et la bulle 18 soit conforme à la classe 6 ou à la classe 7 de la norme ISO 14644-1.

Le moteur 78 permet de fournir l'énergie pour la mise en marche du ventilateur 66.

Le conduit 62 permet d'acheminer l'air en provenance du moto-ventilateur soufflant à filtre 58 à la caisse 14.

Dans un deuxième mode de réalisation, le dispositif d'approvisionnement 22 comporte des bouteilles sous pression, non représentées sur la figure. De telles bouteilles sous pression contiennent un gaz sous pression tel que de l'azote et sont propres à approvisionner la caisse 14, et donc l'espace intérieur formé par la caisse 14 et la bulle 18, en gaz sous pression.

Les bouteilles sous pression sont propres à générer un gaz, tel de l'azote, dont la concentration particulaire est maîtrisée. Par exemple, le gaz généré par les bouteilles sous pression est conforme à la classe 6 ou à la classe 7 de la norme ISO 14644-1.

Le pressostat 26 est relié, d'une part, au dispositif d'approvisionnement 22 et, d'autre part, à la caisse 14.

Le pressostat 26 est un pressostat différentiel. Un tel pressostat 26 différentiel est apte à mesurer une pression différentielle, c'est-à-dire une différence de pression entre deux pressions. Le pressostat 26 différentiel est, notamment, propre à mesurer des pressions différentielles positives ou négatives.

Le pressostat 26 différentiel est propre à contrôler la pression différentielle dans l'espace intérieur formé par la caisse 14 et la bulle 18. En particulier, lorsque la pression différentielle dans l'espace intérieur formé par la caisse 14 et la bulle 18 est supérieure ou égale en valeur absolue à une valeur prédéterminée, le pressostat 26 différentiel est configuré pour désactiver le dispositif d'approvisionnement en gaz 22.

Par exemple, la valeur prédéterminée en valeur absolue de la pression différentielle est de l'ordre de quelques PSI.

La documentation technique comprend, par exemple, un manuel de prise en main de l'unité de réparation 10 ou encore des fiches techniques sur les différentes pièces présentes sur une nacelle.

La nacelle 11 à réparer est, par exemple, une nacelle de désignation laser.

La nacelle 11 à réparer comporte, par exemple, des composants en panne, endommagés, ou déréglés. De tels composants sont, notamment, des cartes électroniques, des câbles électriques, des caméras ou encore des systèmes laser.

Le fonctionnement de l'unité de réparation 10 selon l'invention va maintenant être décrit.

Initialement, un opérateur ouvre le couvercle de la caisse 14. L'opérateur trouve la bulle 18 de l'unité de réparation 10 dans l'état replié. Les tubes 50 sont comprimés sur la bulle 18.

Lorsqu'un opérateur souhaite utiliser l'unité de réparation 10 en vue de réparer la nacelle 11, par exemple, la section avant d'une nacelle de désignation laser, l'opérateur met en marche le dispositif d'approvisionnement en gaz 22.

Le gaz, par exemple de l'azote, est acheminé dans l'espace intérieur formé par la caisse 14 et la bulle 18 et permet le déploiement de la bulle 18.

Ensuite, l'opérateur nettoie soigneusement la partie de la nacelle 11 à réparer. Puis, l'opérateur introduit la partie de la nacelle 11 à réparer dans l'ouverture 46 de la bulle 18.

L'opérateur introduit, ensuite, ses mains, puis ses bras dans deux tubes 50. Les tubes 50 sont ajustés avec des élastiques de sorte à serrer les bras de l'opérateur dès lors que ses mains se trouvent dans la bulle 18.

Puis, l'opérateur effectue la réparation de la nacelle 11 dans la bulle 18 au moyen, notamment, des outils 30 et des pièces de rechange 34.

Optionnellement, l'opérateur a la possibilité d'ajouter un outil ou une pièce de rechange non présente initialement dans la caisse 14. Pour cela, l'opérateur utilise le sas tiroir 38. L'opérateur introduit, par exemple un outil 30 tel qu'un tournevis dans le sas tiroir 38 et referme le sas tiroir 38 de sorte que l'outil 30 est introduit dans la caisse 14 sans contaminer l'environnement particulaire de l'espace intérieur formé par la caisse 14 et la bulle 18.

L'opérateur retire, ensuite, la partie de la nacelle 11 réparée.

Enfin, l'opérateur dégonfle la bulle 18 de sorte que la bulle 18 soit à nouveau dans l'état replié. La bulle 18 se dégonfle, d'une part, par retrait de la partie de la nacelle 11 et, d'autre part, par des pressions exercées par l'opérateur sur la surface extérieur de la bulle 18. L'ouverture 46 par laquelle est introduite la nacelle 11 à réparer est, en effet, suffisamment grande pour permettre un dégonflage aisé de la bulle 18.

Ainsi, une fois déployée, la bulle 18 est maintenue sous pression par le dispositif d'approvisionnement en gaz 22 de sorte à éviter l'entrée de particules polluantes, telles des poussières, dans la bulle 18.

Ainsi, une telle unité de réparation 10 permet d'obtenir une salle blanche transportable ou mobile aussi bien sur terre, qu'en mer ou dans les airs.

Le déplacement d'un opérateur et de l'unité de réparation 10 sur un site où se trouve une nacelle à réparer permet de gagner du temps et de réduire les coûts par rapport à un rapatriement de la nacelle à réparer chez son fournisseur.

Ainsi, l'unité de réparation 10, en particulier la bulle 18, forme un moyen de soutien projetable souple et permet l'intervention d'un opérateur sur une nacelle dans un environnement confiné et maîtrisé.

Une telle unité de réparation 10 offre le choix à l'utilisateur, notamment par le choix du dispositif d'approvisionnement 22, de réparer une nacelle sous différents environnements gazeux, par exemple de l'air ou de l'azote.

L'azote présente l'avantage de ne pas oxyder les pièces métalliques, contrairement à l'air. Ainsi, puisque seules les mains d'un opérateur rentrent dans la bulle 18, l'azote est directement utilisable à la place de l'air pour déployer et maintenir sous pression la bulle 18.

Cependant, contrairement à une salle blanche, une telle unité de réparation 10 présente l'avantage d'être peu volumineuse et donc transportable aisément. Ainsi, l'unité de réparation 10 est apte à être transportée à de multiples endroits, aussi bien par terre, mer ou airs.

De plus, contrairement à une salle blanche, une telle unité de réparation 10 est simple d'utilisation dans la mesure où un seul opérateur suffit pour la déployer et l'utiliser pour réparer une nacelle.

En outre, contrairement à une salle blanche, l'unité de réparation 10 reste un environnement confiné dans la mesure où seules les mains de l'opérateur rentrent dans la bulle 18. En effet, l'opérateur constitue le principal polluant de par la vapeur d'eau, les cheveux ou encore les poussières qu'il est susceptible d'apporter dans la salle blanche. Ainsi, avec une telle unité de réparation 10, cela n'implique pas de prévoir une journée entière de balayage pour nettoyer la salle blanche après chaque utilisation..

Enfin, contrairement à une salle blanche, l'unité de réparation 10 permet de s'affranchir des entrées et sorties de personnes dans la salle blanche et de ne pas avoir de limitation du nombre de personnes dans la salle blanche lors de l'intervention.

Ainsi, l'unité de réparation 10 offre les avantages d'une boîte à gant, dans la mesure où seules les mains de l'opérateur rentrent dans la bulle 18. Il est entendu par « boîte à gants » une enceinte étanche qui permet des manipulations dans un environnement particulier. Des gants montants, par exemple, jusqu'aux épaules sont fixés à l'une des parois de la boîte à gants et permettent à un opérateur d'accéder à l'intérieur de la boîte à gants sans que le confinement ne cesse. Une boîte à gant est généralement réalisée dans un matériau rigide, par exemple, en plexiglas.

Cependant, contrairement à une boîte à gants classique, l'opérateur utilisant l'unité de réparation 10 n'a pas de gants. Cela permet de faciliter la manipulation des outils 30, par exemple la manipulation de vis ou d'autres outils nécessitant de la précision dans les mouvements.

De plus, contrairement à une boîte à gants classique, l'unité de réparation 10 est souple grâce aux matériaux utilisés pour la réalisation de la bulle 18. La souplesse apportée par de tels matériaux offre à l'opérateur une grande liberté de mouvements. Une telle liberté de mouvements est impossible à obtenir en opérant dans une boîte à gants rigide sur un élément de la taille d'une section avant de nacelle de désignation laser notamment.

En outre, les outillages 30 et pièces de rechange 34 présents dans la caisse 14 ne sont pas contaminés par l'extérieur ou par l'opérateur.

De plus, le sas tiroir 38 permet de faire entrer des éléments, tels des outils ou des pièces de rechange, dans l'espace intérieur formé par la caisse 14 et la bulle 18 sans contaminer la propreté de l'espace intérieur formé par la caisse 14 et la bulle 18, c'est-à-dire sans modifier la concentration en particules ou les autres paramètres tels la pression de l'espace intérieur formé par la caisse 14 et la bulle 18.

Ainsi, l'unité de réparation 10 est de mise en oeuvre aisée et permet de minimiser la durée de réparation des nacelles.

En outre, l'unité de réparation 10 est facile à préparer. Le procédé de préparation suivant est notamment envisageable pour préparer une unité de réparation 10 selon l'invention.

Le procédé de préparation comporte une étape initiale de fourniture d'une caisse 14 dans un environnement où la concentration particulaire est maitrisée. Un tel environnement est, par exemple, une salle blanche de concentration particulaire conforme à la classe 6 ou à la classe 7 de la norme ISO 14644-1.

Le procédé de préparation comporte, ensuite, une étape de fourniture d'une bulle 18, ayant un état déployé et un état replié, dans l'environnement.

Le procédé de préparation comprend, après, une étape de remplissage de la caisse 14 avec des outils 30 et/ou des pièces de rechange 34 adaptées à une opération de réparation donnée et à un type de nacelle donné.

Le procédé de préparation comporte, ensuite, une étape de fixation de la bulle 18 dans l'état replié sur la caisse 14. Cette étape de fixation est, par exemple, réalisée au moyens de vis, de plaques ou lamelles de fixation ou encore de joints de fixation.

Le procédé de préparation comporte, enfin, une étape de positionnement du couvercle sur la caisse 14.

L'unité de réparation 10 est prête pour être acheminée sur un site en vue de réparer une nacelle.

La bulle 18 n'est déployée que sur le site où se trouve la nacelle à réparer.

La présence d'élastiques permet de serrer les bras de l'opérateur lorsque les mains de l'opérateur sont introduites dans la bulle 18. Cela permet d'améliorer le maintien des bras de l'opérateur dans les tubes 50 et, ainsi, de faciliter les gestes de l'opérateur dans la bulle 18. La réparation de la nacelle 11 est donc plus aisée.

## Revendications

1. Unité de réparation (10) pour nacelle (11), notamment pour une nacelle de désignation laser, comprenant :
- une caisse (14) transportable,
- une bulle (18) fixée sur la caisse (14), la bulle (18) ayant un état replié et un état déployé, la bulle (18) comportant une ouverture (46) d'introduction d'une partie d'une nacelle (11) et au moins deux protubérances formant tube (50) de passage des mains d'un opérateur, chaque tube (50) débouchant dans la bulle (18),
- un dispositif d'approvisionnement en gaz (22) propre à faire passer la bulle (18) de l'état replié à l'état déployé,
la caisse (14) et la bulle (18) délimitant un espace intérieur étanche aux contaminants extérieurs à la fois dans l'état replié et dans l'état déployé, chaque tube (50) comprenant des élastiques, les élastiques étant propres à serrer les bras d'un opérateur lorsque les mains dudit opérateur sont introduites dans la bulle (18), l'unité de réparation (10) comprenant un pressostat (26) connecté d'une part à l'intérieur de la caisse (14) et d'autre part au dispositif d'approvisionnement en gaz (22), le pressostat (26) étant propre à mesurer la pression différentielle à l'intérieur de la bulle (18) et à désactiver le dispositif d'approvisionnement en gaz (22) lorsque la pression différentielle mesurée à l'intérieur de la bulle (18) est supérieure ou égale en valeur absolue à une valeur prédéterminée.

2. Unité de réparation (10) selon la revendication 1, dans laquelle la caisse (14) comprend un sas tiroir (38) propre à permettre l'introduction d'éléments dans la caisse (14) sans contaminer l'espace intérieur.

3. Unité de réparation (10) selon la revendication 1 ou 2, dans laquelle la bulle (18) est faite dans un matériau souple et transparent.

4. Unité de réparation (10) selon l'une quelconque des revendications 1 à 3, dans laquelle le nombre de tubes (50) est pair et chaque tube (50) est diamétralement opposé à un autre tube (50) de la bulle (18).

5. Unité de réparation (10) selon l'une quelconque des revendications 1 à 4, dans laquelle, le dispositif d'approvisionnement en gaz (22) est un moto-ventilateur soufflant à filtre (58) propre à générer un flux d'air dont la concentration particulaire est maitrisée.

6. Unité de réparation (10) selon l'une quelconque des revendications 1 à 4, dans laquelle, le dispositif d'approvisionnement en gaz (22) comporte une ou plusieurs bouteilles d'azote propre à générer un flux d'azote dont la concentration particulaire est maîtrisée.

7. Procédé de réparation d'une nacelle (11) comportant les étapes suivantes :
- la fourniture d'une unité de réparation (10) selon l'une quelconque des revendications 1 à 6,
- la fourniture d'une nacelle (11) à réparer,
- le déploiement de la bulle (18) de l'unité de réparation (10),
- l'introduction de la nacelle (11) à réparer dans l'ouverture (46) de la bulle (18),
- l'introduction des mains d'un opérateur dans deux tubes (50) de la bulle (18),
- la réparation de la nacelle (11) à réparer par l'opérateur, et
- le dégonflage de la bulle (18).

8. Procédé de réparation d'une nacelle (11) selon la revendication 7, l'unité de réparation (10) étant une unité de réparation (10) selon la revendication 2 ou une unité de réparation (10) selon l'une quelconque des revendications 3 à 6 dans leur dépendance avec la revendication 2, comportant l'étape suivante :
- l'introduction d'éléments dans la caisse (14) au moyen du sas tiroir (38).

9. Procédé de préparation d'une unité de réparation (10) selon l'une quelconque des revendications 1 à 6, la caisse (14) comprenant un couvercle, comportant les étapes suivantes :
- la fourniture d'une caisse (14) dans une salle blanche,
- la fourniture d'une bulle (18), ayant un état déployé et un état replié, dans la salle blanche,
- le remplissage de la caisse (14) avec des outils (30) et des pièces de rechange (34),
- la fixation de la bulle (18) dans l'état replié sur la caisse (14), et
- le positionnement du couvercle sur la caisse (14).

## Patentansprüche

1. Reparatureinheit (10) für eine Gondel (11), insbesondere für eine Gondel eines Markierlasers, aufweisend:
- ein transportables Gehäuse (14),
- eine Blase (18), die auf dem Gehäuse (14) befestigt ist, wobei die Blase (18) einen Faltzustand und einen Entfaltzustand hat, wobei die Blase (18) eine Öffnung (46) zum Einführen eines Teils einer Gondel (11) und mindestens zwei Ausstülpungen aufweist, die ein Rohr (50) zum Durchgang von Händen einer Bedienungsperson formen, wobei jedes Rohr (50) in die Blase (18) mündet,
- eine Gaszufuhrvorrichtung (22), welche geeignet ist, die Blase (18) aus dem Faltzustand in den Entfaltzustand zu überführen,
wobei das Gehäuse (14) und die Blase (18) einen Innenraum begrenzen, der sowohl im Faltzustand wie auch im Entfaltzustand für äußere Verunreinigungen undurchlässig ist, wobei jedes Rohr (50) elastische Bänder aufweist, wobei die elastischen Bänder geeignet sind, die Arme einer Bedienperson zu pressen, wenn die Hände der besagten Bedienperson in die Blase (18) eingeführt sind, wobei die Reparatureinheit (10) einen Druckwächter (26) aufweist, welcher zum einen mit dem Inneren des Gehäuses (14) und zum anderen mit der Gaszufuhrvorrichtung (22) verbunden ist, wobei der Druckwächter (26) geeignet ist, den Differenzdruck zum Inneren der Blase (18) zu messen und um die Gaszufuhrvorrichtung (22) zu deaktivieren, wenn der Differenzdruck, welcher zum Inneren der Blase (14) gemessen wird, im Absolutwert größer oder gleich einem vorbestimmten Wert ist.

2. Reparatureinheit (10) nach Anspruch 1, wobei das Gehäuse (14) eine Schubladenschleuse (38) aufweist, die geeignet ist, um das Einführen von Elementen in das Gehäuse (14) zu ermöglichen, ohne den Innenraum zu verunreinigen.

3. Reparatureinheit (10) nach Anspruch 1 oder 2, wobei die Blase (18) aus einem flexiblen und transparenten Material gemacht ist.

4. Reparatureinheit (10) nach einem der Ansprüche 1 bis 3, wobei die Anzahl der Rohre (50) paarweise ist und jedes Rohr (50) einem anderen Rohr (50) der Blase (18) diametral gegenüberliegt.

5. Reparatureinheit (10) nach einem der Ansprüche 1 bis 4, wobei die Gaszufuhrvorrichtung (22) ein Motorgebläse (58) ist, welches auf einen Filter (58) bläst, geeignet zum Erzeugen eines Luftstroms, dessen Partikelkonzentration kontrolliert wird.

6. Reparatureinheit (10) nach einem der Ansprüche 1 bis 4, wobei die Gaszufuhrvorrichtung (22) eine oder mehrere Flaschen Stickstoff aufweist, die geeignet sind, einen Stickstoffstrom zu erzeugen, dessen Partikelkonzentration kontrolliert wird.

7. Verfahren zum Reparieren einer Gondel (11), die folgenden Schritte aufweisend:
- Bereitstellen einer Reparatureinheit (10) nach einem der Ansprüche 1 bis 6,
- Bereitstellen einer zu reparierenden Gondel (11),
- Entfalten der Blase (18) der Reparatureinheit (10),
- Einführen der zu reparierenden Gondel (11) in die Öffnung (46) der Blase (18),
- Einführen von Händen einer Bedienperson in zwei Rohre (50) der Blase (18),
- Reparieren der zu reparierenden Gondel (11) durch die Bedienperson und
- Entleeren der Blase (18).

8. Verfahren zum Reparieren einer Gondel (11) nach Anspruch 7, wobei die Reparatureinheit (10) eine Reparatureinheit (10) nach Anspruch 2 oder eine Reparatureinheit (10) nach einem der Ansprüche 3 bis 6 in ihrer Abhängigkeit von Anspruch 2 ist, aufweisend den folgenden Schritt:
- Einbringen von Elementen in das Gehäuse (14) mittels der Schubladenschleuse (38).

9. Verfahren zur Herstellung einer Reparatureinheit (10) nach einem der Ansprüche 1 bis 6, wobei das Gehäuse (14) einen Deckel aufweist, aufweisend die folgenden Schritte:
- Bereitstellen eines Gehäuses (14) in einem Reinraum,
- Bereitstellen einer Blase (18), welche einen Entfaltzustand und einen Faltzustand hat, in dem Reinraum,
- Füllen des Gehäuses (14) mit Werkzeugen (30) und Ersatzteilen (34),
- Fixieren der Blase (18) im Faltzustand auf dem Gehäuse (14) und
- Positionieren des Deckels auf dem Gehäuse (14).

## Claims

1. A repair unit (10) for a pod (11), in particular for a laser designation pod, comprising:
- a transportable casing (14),
- a bubble (18) attached on to the casing (14), the bubble (18) having a retracted state and a deployed state, the bubble (18) comprising an insertion opening (46) for inserting a part of a pod (11) and at least two projections forming through-passage tubes (50) for the hands of an operator, each tube (50) opening out into the bubble (18),
- a gas supply device (22) capable of switching the bubble (18) from the retracted state into the deployed state,
the casing (14) and the bubble (18) delimiting an interior space that is sealed against exterior contaminants both in the retracted state and in the deployed state, each tube (50) comprising elastics, the elastics being capable of tightly gripping the arms of an operator when the hands of the said operator are introduced into the bubble (18), the repair unit (10) comprising a pressure switch (26) connected on the one hand to the interior of the casing (14) and on the other hand to the gas supply device (22), the pressure switch (26) being capable of measuring the differential pressure within the interior of the bubble (18) and of disabling the gas supply device (22) when the differential pressure measured within the interior of the bubble (18) is, in absolute terms, greater than or equal to a predetermined value.

2. A repair unit (10) according to claim 1, wherein the casing (14) comprises an air lock drawer (38) capable of enabling the introduction of elements into the casing (14) without contaminating the interior space.

3. A repair unit (10) according to claim 1 or 2, wherein the bubble (18) is made out of a flexible and transparent material.

4. A repair unit (10) according to any one of claims 1 to 3, wherein there is an even number of tubes (50) and each tube (50) is positioned diametrically opposite to another tube (50) of the bubble (18).

5. A repair unit (10) according to any one of claims 1 to 4, wherein, the gas supply device (22) is a motorised fan blower with filter (58) that is capable of generating an air flow, the particle concentration of which being controlled.

6. A repair unit (10) according to any one of claims 1 to 4, wherein the gas supply device (22) comprises one or more bottles of nitrogen capable of generating a flow of nitrogen the particle concentration of which being controlled.

7. A method for repairing a pod (11) comprising the following steps:
- the provision of a repair unit (10) according to any one of claims 1 to 6,
- the provision of a pod (11) to be repaired,
- the deployment of the bubble (18) of the repair unit (10),
- the introduction of the pod (11) to be repaired into the opening (46) of the bubble (18),
- the introduction of the hands of an operator into two tubes (50) of the bubble (18),
- the repairing of the pod (11) to be repaired by the operator, and
- the deflating of the bubble (18).

8. A method for repairing a pod (11) according to claim 7, the repair unit (10) being a repair unit (10) according to claim 2 or a repair unit (10) according to any one of claims 3 to 6, the latter being dependent on claim 2, with the method comprising the following step:
- the introduction of elements into the casing (14) by means of the air lock drawer (38).

9. A method for preparing a repair unit (10) according to any one of claims 1 to 6, the casing (14) comprising a cover, that comprises the following steps:
- the provision of a casing (14) in a white room,
- the provision of a bubble (18), having a deployed state and a retracted state, in the white room,
- the filling of the casing (14) with the tools (30) and spare parts (34),
- the attaching of the bubble (18) in the retracted state on to the casing (14), and
- the positioning of the cover on the casing (14).
